# EUROPEAN PATENT APPLICATION

(11) **EP 4 559 817 A1**
(43) Date of publication of application: **28.05.2025**
(21) Application number: 22952007.7
(22) Date of filing: 22.07.2022
(51) Int. Cl.: B64F 1/305

(54) **AIRPORT GROUND ASSISTANCE EQUIPMENT**

(71) Applicant: ShinMaywa Industries, Ltd., Takarazuka-shi, Hyogo 665-8550 (JP)
(72) Inventor: SHIMOMORI, Wataru, Hyogo, 665-8550 (JP)
(74) Representative: Dehns
(86) International application number: PCT/JP2022/028504
(87) International publication number: WO 2024/018623

(57) **Abstract**

Provided is airport ground support equipment that makes it possible to calculate a discrepancy of an actual stop position of an aircraft from a regular stop position of the aircraft without requiring an input of aircraft type information about the aircraft. One example of the airport ground support equipment of the present invention is airport ground support equipment including: a support equipment body configured to perform an operation of coming close to a stopped aircraft from a standby position and to enable a person and/or an article to move between the support equipment body and the aircraft when the support equipment body is adjacent to or in contact with the aircraft; an aircraft type determiner (1B) that captures an image of the aircraft when the support equipment body is at the standby position and that determines an aircraft type of the aircraft based on the captured image; a nose gear image capturing camera (91) that is mounted to the support equipment body and that captures an image of a nose gear of the aircraft stopped on an apron when the support equipment body is at the standby position; and a stop discrepancy calculator (53) that detects a stop position of the nose gear based on the image captured by the nose gear image capturing camera and that calculates a discrepancy of the stop position of the nose gear from a regular stop position that is set in advance corresponding to the aircraft type determined by the aircraft type determiner (1B).

## Description

### Technical Field

The present invention relates to airport ground support equipment, such as a passenger boarding bridge and a passenger step car.

### Background Art

At an airport, various types of airport ground support equipment, such as a passenger boarding bridge and a passenger step car, are used. It should be noted that, in the present specification and the claims, the term "airport ground support equipment" is defined to encompass passenger boarding bridges. A passenger boarding bridge includes: a rotunda that is connected to a terminal building; a tunnel unit that is connected to the rotunda and that forms a walkway; and a cab that is connected to the distal end of the tunnel unit and that is to be docked with an aircraft.

The cab of the passenger boarding bridge is moved from a predetermined standby position to get docked with an aircraft. For example, Patent Literature 1 describes moving the cab from the standby position and stopping the cab at a predetermined target position in such an orientation that the cab faces an entrance of the aircraft. Patent Literature 1 also describes setting the target position based on the following: an actual docking position of the cab when the cab is docked with the entrance of the aircraft for the first time; and the amount of deviation between an actual stop position of the aircraft and a predetermined stop position of the aircraft when the cab is docked with the entrance of the aircraft for the first time. Patent Literature 1 also describes that at the time of docking the cab with the entrance of the aircraft for the second or subsequent time, the cab is moved based on the set target position.

### Citation List

### Patent Literature

PTL 1: Japanese Laid-Open Patent Application Publication No. 2005-104193

### Summary of Invention

### Technical Problem

Incidentally, in a case where a discrepancy (i.e., the amount of deviation) of the actual stop position of the aircraft from a regular stop position of the aircraft is great, in order to achieve a high degree of safety, it is recommended to: before docking the passenger boarding bridge with the aircraft, adjust the position of the aircraft by using a pushback truck or the like to tow the aircraft, thereby bringing the aircraft to the regular stop position; and thereafter dock the passenger boarding bridge with the aircraft.

The regular stop position of the aircraft is set as a stop position of the nose gear of the aircraft. Normally, the regular stop position is set corresponding to the aircraft type of the aircraft. Accordingly, the regular stop position may be different from one aircraft type to another. Aircraft type information about the aircraft may be inputted to a controller through an operation of an operating device by an operator. Alternatively, the controller may receive, from an external device such as a VDGS (Visual Docking Guidance System) or FIDS (Flight Information Display System), an input of aircraft type information about the aircraft.

However, the operator might erroneously input wrong aircraft type information, or some airports may not be equipped with the VDGS. In addition, there are a large number of airports that are not equipped with equipment for communications between the passenger boarding bridge and the FIDS or the like.

The present invention has been made to solve the above-described problems. An object of the present invention is to provide airport ground support equipment that makes it possible to calculate a discrepancy of an actual stop position of an aircraft from a regular stop position of the aircraft without requiring an input of aircraft type information about the aircraft.

### Solution to Problem

In order to achieve the above object, airport ground support equipment according to a first aspect of the present invention includes: a support equipment body configured to perform an operation of coming close to an aircraft stopped on an apron from a standby position and to enable a person and/or an article to move between the support equipment body and the aircraft when the support equipment body is adjacent to or in contact with the aircraft; an aircraft type determiner that captures an image of the aircraft when the support equipment body is at the standby position and that determines an aircraft type of the aircraft based on the captured image; a nose gear image capturing camera that is mounted to the support equipment body and that captures an image of a nose gear of the aircraft stopped on the apron when the support equipment body is at the standby position; and a stop discrepancy calculator that detects a stop position of the nose gear based on the image captured by the nose gear image capturing camera and that calculates a discrepancy of the stop position of the nose gear from a regular stop position that is set in advance corresponding to the aircraft type determined by the aircraft type determiner.

The above configuration includes the aircraft type determiner, which captures an image of the aircraft and determines the aircraft type of the aircraft based on the captured image. The stop position of the nose gear is detected based on an image captured by the nose gear image capturing camera, which captures an image of the nose gear of the aircraft. The discrepancy of the stop position of the nose gear from the regular stop position that is set in advance corresponding to the aircraft type determined by the aircraft type determiner is calculated. In this manner, the discrepancy of the actual stop position of the aircraft from the regular stop position of the aircraft can be calculated without requiring an input of aircraft type information about the aircraft.

Airport ground support equipment according to a second aspect is configured such that, in the airport ground support equipment according to the first aspect, the aircraft type determiner includes: a first camera that captures an image of a painted pattern painted on the aircraft, the painted pattern being characteristic to an airline company that uses the aircraft; a second camera that captures an image of a cover of the nose gear of the aircraft; and a determination processor that determines the aircraft type of the aircraft based on the airline company that is identified from the painted pattern whose image has been captured by the first camera and an aircraft registration abbreviation that is marked on the cover of the nose gear whose image has been captured by the second camera.

According to the above configuration, the aircraft type of the aircraft is determined based on the airline company identified from the aircraft's painted pattern whose image has been captured by the first camera and the aircraft registration abbreviation marked on the cover of the nose gear whose image has been captured by the second camera. Here, the official aircraft registration (the identification code of the aircraft) is uniquely determined from the airline company that uses the aircraft and the aircraft registration abbreviation that is set by the airline company, and the aircraft type of the aircraft is uniquely determined from the official aircraft registration. Thus, the aircraft type of the aircraft can be uniquely determined from the airline company that uses the aircraft and the aircraft registration abbreviation that is marked on the aircraft. This makes it possible to accurately determine the aircraft type of the aircraft. It should be noted that the same camera may double as the nose gear image capturing camera and the second camera.

Airport ground support equipment according to a third aspect of the present invention is configured such that the airport ground support equipment according to the first or second aspect further includes a body controller that prohibits the support equipment body from performing the operation of coming close to the aircraft in a case where the discrepancy calculated by the stop discrepancy calculator is out of an allowable range.

According to the above configuration, the support equipment body is prohibited from performing the operation of coming close to the aircraft in a case where the discrepancy of the stop position of the aircraft (nose gear) is out of the allowable range. This makes it possible to ensure a high degree of safety.

Airport ground support equipment according to a fourth aspect of the present invention is configured such that the airport ground support equipment according to any one of the first to third aspects further includes a notifier that notifies information about an abnormality in the stop position of the aircraft to outside in a case where the discrepancy calculated by the stop discrepancy calculator is out of the allowable range.

According to the above configuration, since the information about the abnormality in the stop position of the aircraft can be notified to a worker on the apron, the worker can, for example, promptly adjust the stop position of the aircraft by using a pushback truck or the like.

### Advantageous Effects of Invention

The present invention is configured as above, and has an advantage of being able to provide airport ground support equipment that makes it possible to calculate a discrepancy of an actual stop position of an aircraft from a regular stop position of the aircraft without requiring an input of aircraft type information about the aircraft.

The above object, other objects, features, and advantages of the present invention will be made clear by the following detailed description of preferred embodiments with reference to the accompanying drawings.

### Brief Description of Drawings

FIG. 1 is a schematic plan view of a passenger boarding bridge that is one example of airport ground support equipment according to an embodiment of the present invention.
FIG. 2 is a schematic side view of the passenger boarding bridge.
FIG. 3 is a view showing a cab distal end part to be docked with an aircraft, the view being taken from the aircraft side.
FIG. 4 schematically shows a control system of the passenger boarding bridge, including an operating panel.
FIG. 5 is a flowchart showing one example of a stop position determination process performed by a controller.
FIG. 6 is a schematic diagram showing one example of an image captured by a nose gear image capturing camera when the cab is at a standby position.

### Description of Embodiments

Hereinafter, a preferred embodiment of the present invention is described with reference to the drawings. In the drawings, the same or corresponding elements are denoted by the same reference signs, and repeating the same descriptions is avoided below. The drawings show each component schematically in order to facilitate the understanding thereof. Therefore, in some cases, the drawings may not display accurate shapes, accurate dimensional ratios, etc. The present invention is not limited to the embodiment described below.

### (Embodiment)

Airport ground support equipment according to the present embodiment is defined to encompass passenger boarding bridges, passenger step cars, airport catering trucks, etc. In the description below, a passenger boarding bridge is taken as an example of the airport ground support equipment.

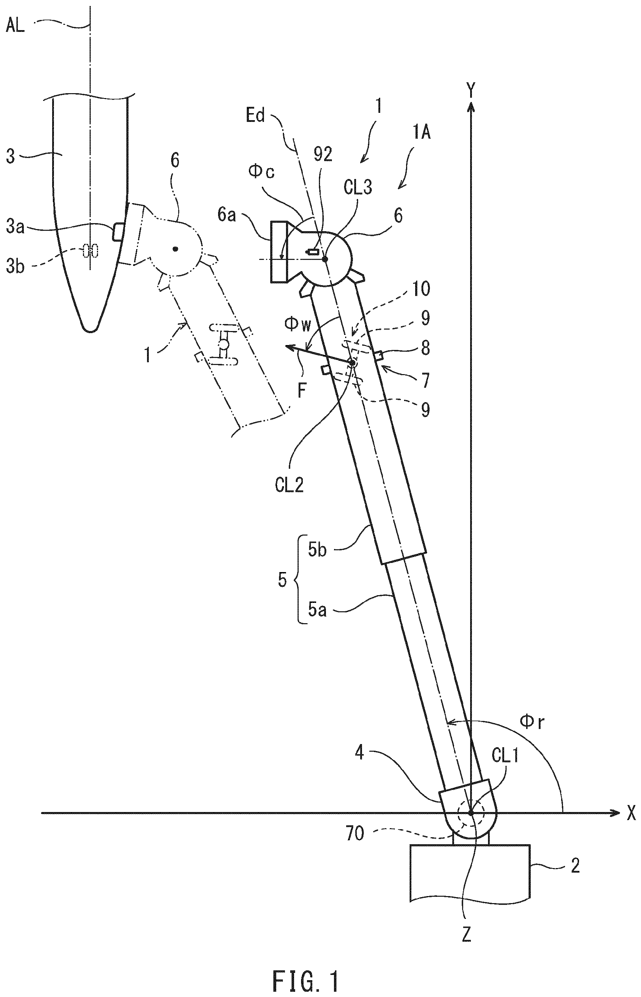

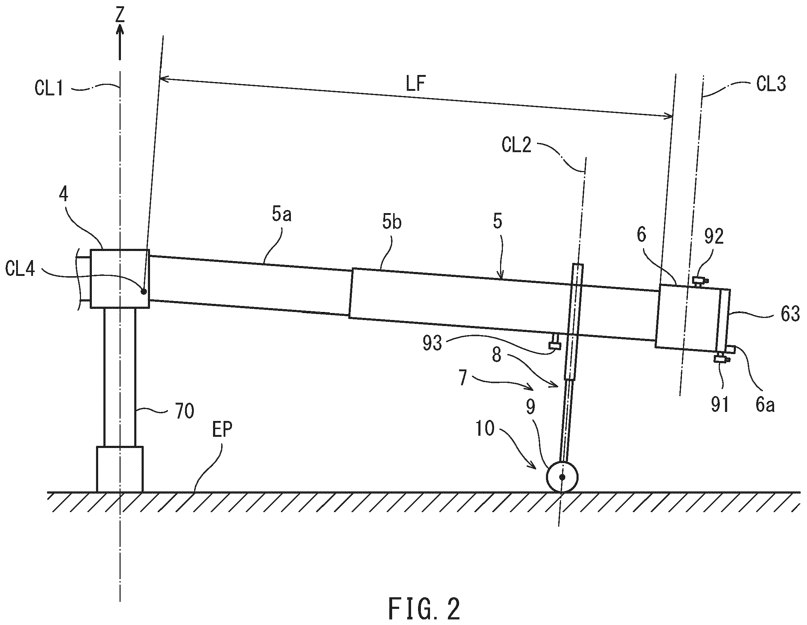

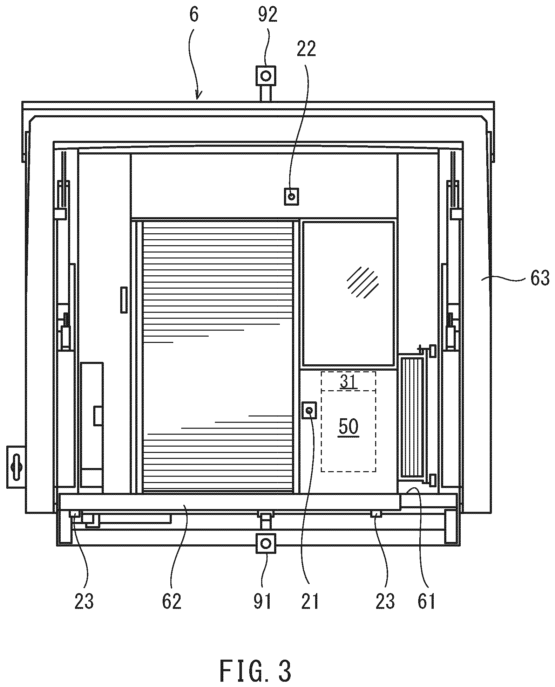

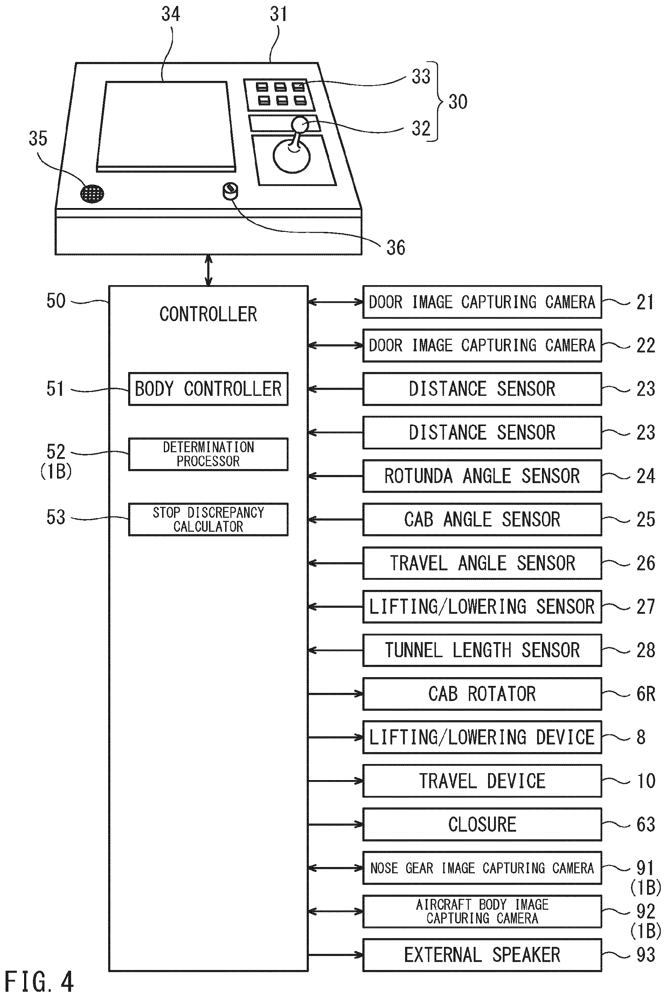

FIG. 1 is a schematic plan view showing one example of the passenger boarding bridge, which is one example of the airport ground support equipment according to the present embodiment. FIG. 2 is a schematic side view of the passenger boarding bridge. FIG. 3 is a front view of a cab distal end part to be docked with an aircraft (the front view is taken from the aircraft side). FIG. 4 schematically shows a control system of the passenger boarding bridge, including an operating panel.

The passenger boarding bridge 1 includes a boarding bridge body 1A, a plurality of cameras 21, 22, 91, and 92 (FIG. 4), a plurality of sensors 23 to 28 (FIG. 4), an operating panel 31 (FIG. 4), a controller 50 (FIG. 4), etc.

The boarding bridge body 1A includes: a horizontally rotatable rotunda (a proximal-end round room) 4 connected to an entrance of a terminal building 2 of an airport; a tunnel unit 5, whose proximal end is connected to the rotunda 4, the tunnel unit 5 being configured to be extendable and retractable in the longitudinal direction of the tunnel unit 5; a cab (a distal-end round room) 6 provided at the distal end of the tunnel unit 5 in such a manner that the cab 6 is rotatable in regular and reverse directions; a drive column 7; a cab rotator 6R (FIG. 4) and a closure 63 (FIG. 2 and FIG. 3), which will be described below; and so forth. The boarding bridge body 1A corresponds to a support equipment body.

The rotunda 4 is supported by a support pillar 70, such that the rotunda 4 is rotatable in regular and reverse directions about a rotational axis (a vertical axis) CL1.

The tunnel unit 5 forms a passenger walkway, and includes a plurality of tubular tunnels 5a and 5b, which are fitted together in a nested manner, such that the tunnel unit 5 is extendable and retractable in the longitudinal direction thereof. In the description herein, the tunnel unit 5 is formed by the two tunnels 5a and 5b as one example. The tunnel unit 5 is formed by at least two tunnels. The proximal end of the tunnel unit 5 is connected to the rotunda 4 in such a manner that the proximal end of the tunnel unit 5 is swingable about a rotational axis CL4 (see FIG. 2), which extends horizontally within the rotunda 4. That is, the tunnel unit 5 is connected to the rotunda 4 in such a manner that the tunnel unit 5 is liftable and lowerable.

The drive column 7, which serves as support legs, is mounted to the distal side of the tunnel unit 5 (specifically, the tunnel 5b, which is the frontmost tunnel). It should be noted that the drive column 7 may be mounted to the cab 6.

The drive column 7 is provided with a lifting/lowering device 8, which lifts and lowers the cab 6 and the tunnel unit 5. The lifting/lowering device 8 includes, for example, a pair of extendable and retractable support pillars, which supports the tunnel unit 5. The tunnel unit 5 can be lifted/lowered by extension/retraction of the pair of support pillars. Accordingly, the cab 6 and the tunnel unit 5 can be swung in the up-down direction with respect to the rotunda 4.

The drive column 7 is further provided with a travel device 10 including two travel wheels 9, which are drivable to rotate independently of each other in regular and reverse directions. The travel device 10 is provided under the lifting/lowering device 8. The travel device 10 is configured to travel forward (travel in an arrow F direction) and travel backward by rotation of the two travel wheels 9. The travel device 10 is also configured to be rotatable in regular and reverse directions about a rotational axis CL2, and thereby the travel direction of the travel device 10 is changeable. By causing the travel device 10 (the travel wheels 9) to travel on an apron EP, the tunnel unit 5 can be rotated about the rotational axis CL1 of the rotunda 4 and can be extended/retracted.

The cab 6 is provided at the distal end of the tunnel unit 5. The cab 6 is configured to be rotatable, by the cab rotator 6R (see FIG. 4), in regular and reverse directions about a rotational axis CL3, which is perpendicular to the floor surface of the cab 6.

The closure 63 is provided at the distal end part of the cab 6. The closure 63 includes a bellows portion that is expandable and contractible in the front-back direction. By docking the cab 6 with an aircraft 3 and expanding the bellows portion forward, the front end of the bellows portion can be brought into contact with the aircraft 3 around a door 3a, which is an entrance of the aircraft 3.

In this example, the rotunda 4 is configured to rotate together with the tunnel unit 5. Alternatively, the tunnel unit 5 may be configured to rotate with respect to the rotunda 4 about the rotational axis CL1 in a state where the rotunda 4 is fixed. Further, in this example, the entire cab 6 is configured to rotate with respect to the tunnel unit 5. Alternatively, only the distal-side part of the cab 6, which is to be docked with the aircraft 3 and which includes the closure 63 and the distal end part 6a, may be configured to rotate about the rotational axis CL3.

As shown in FIG. 3, a bumper 62 is provided at the distal end of a floor 61 of the cab 6 to be docked with the aircraft 3. A plurality of (in this example, two) distance sensors 23 (e.g., laser distance meters) each to measure the distance between the cab 6 and the aircraft 3 are mounted to the bumper 62, such that the distance sensors 23 are arranged in the left-right direction of the bumper 62. It should be noted that the installation positions of the distance sensors 23 are changeable as necessary. For example, the distance sensors 23 may be arranged on the floor 61 of the cab 6.

Further, door image capturing cameras 21 and 22 each to capture an image of the door 3a of the aircraft 3 are installed at respective positions that are recessed from the distal end part of the cab 6. The installation positions of these cameras 21 and 22 may be changed as necessary, so long as the cameras 21 and 22 are disposed away from each other and can each capture an image of the door 3a of the aircraft 3. Also, a nose gear image capturing camera 91 to capture an image of a nose gear 3b of the aircraft 3 is installed at a position under the floor of the distal end part of the cab 6. Further, an aircraft body image capturing camera (a first camera) 92 to capture an image of the fuselage and so forth of the aircraft 3 is installed on top of the roof of the cab 6. The aircraft body image capturing camera 92 preferably has a wider angle of view than that of the other cameras 21, 22, and 91. It should be noted that the aircraft body image capturing camera 92 may be installed on top of the roof of the rotunda 4. In a case where the rotunda 4 is connected to the distal end of a fixed bridge that leads to the terminal building, the aircraft body image capturing camera 92 may be installed on top of the roof of the fixed bridge.

As shown in FIG. 2, an external speaker 93, which is a notifier, is installed, for example, on the drive column 7 or on the bottom surface of the tunnel 5b near the drive column 7. The external speaker 93 is a speaker to make an audio announcement to workers or the like on the apron EP. The installation location of the external speaker 93 and the number of external speakers 93 to be installed may be changed as necessary.

As shown in FIG. 4, the passenger boarding bridge 1 further includes: a rotunda angle sensor 24, which detects a rotational angle Φr (see FIG. 1) of the rotunda 4; a cab angle sensor 25, which detects a rotational angle Φc (see FIG. 1) of the cab 6 with respect to a center line Ed of the tunnel unit 5; a travel angle sensor 26, which detects a rotational angle Φw (an angle indicating a travel direction) (see FIG. 1) of the travel device 10 with respect to the center line Ed of the tunnel unit 5 as seen in a plan view; a lifting/lowering sensor 27, which detects the amount of lifting/lowering by the lifting/lowering device 8; and a tunnel length sensor 28, which detects the length of the tunnel unit 5 (e.g., a length LF in FIG. 2) and which is configured as, for example, a distance meter. These sensors are arranged at suitable positions, respectively.

For example, the operating panel 31 as shown in FIG. 4 is provided inside the cab 6. The operating panel 31 is provided with an operating device 30 and a display 34. The operating device 30 includes: various operation switches 33 to perform operations of, for example, lifting/lowering the tunnel unit 5 and the cab 6 by the lifting/lowering device 8 and rotating the cab 6 by the cab rotator 6R; and an operating lever 32 to operate the travel device 10. The operating panel 31 is further provided with an audio outputter 35 such as a speaker to notify predetermined information to an operator. The operating panel 31 is further provided with a key switch 36. When the operator uses the operating panel 31, the operator first inserts an operation key to a key hole of the key switch 36, and then turns the operation key.

The controller 50 and the operating panel 31 are connected to each other by electrical circuitry. The controller 50 is configured to: receive inputs of information that is based on operations performed with the operating device 30, such as operation commands; and output, for example, information to be displayed on the display 34 and information to be outputted by the audio outputter 35. The controller 50 also receives inputs of, for example, output signals from the sensors 23 to 28. The controller 50 further receives inputs of images captured by the door image capturing cameras 21 and 22, the nose gear image capturing camera 91, and the aircraft body image capturing camera 92, and analyzes the input captured images. The controller 50 can also cause the external speaker 93 to make a predetermined audio announcement.

It should be noted that the controller 50 includes an arithmetic processing unit such as a CPU and a storage unit including a ROM, RAM, etc. The storage unit prestores therein a predetermined program to be executed by the CPU and necessary information for executing the program. As a result of the CPU executing the program, the controller 50 functions as, for example, a body controller 51, a determination processor 52, and a stop discrepancy calculator 53. The controller 50, for example, functions as the body controller 51 to control operations of, for example, the cab rotator 6R, the lifting/lowering device 8, the travel device 10, and the closure 63, thereby controlling operations of the boarding bridge body 1A. It should be noted that the controller 50 may be configured as a single control device performing centralized control, or may be configured as a plurality of control devices performing distributed control in cooperation with each other via communication means. For example, the cab 6 or the frontmost tunnel 5b is provided with the controller 50.

The controller 50 can use, for example, a three-dimensional orthogonal coordinate system (XYZ orthogonal coordinate system shown in FIG. 1), in which the intersection point of the rotational axis CL1 of the rotunda 4 and the plane of the apron EP is set as the origin, to calculate, in real time, the position (position coordinates) of a predetermined part of the passenger boarding bridge 1, for example, a predetermined position on the distal end part 6a of the cab 6 or the center position of the travel device 10, and display the calculated position (position coordinates) on the display 34. The controller 50 herein is configured to calculate the current position of the predetermined part of the passenger boarding bridge 1 based on, for example, detection values of the rotunda angle sensor 24, the cab angle sensor 25, the tunnel length sensor 28, and the lifting/lowering sensor 27. Of the position coordinates, an X coordinate value, a Y coordinate value, and a Z coordinate value each indicate a distance from the origin. In the description herein, X coordinate values on the right side of the origin are positive values, and X coordinate values on the left side of the origin are negative values.

Next, one example of operations of the passenger boarding bridge 1 is described. Operations of the passenger boarding bridge 1 are realized by control performed by the controller 50.

Before the aircraft 3 arrives at the apron, the passenger boarding bridge 1 stands by at a predetermined standby position indicated by solid line of FIG. 1. The aircraft 3 is brought to a stop while targeting at a regular stop position. The regular stop position is such a position that when the aircraft 3 is at the regular stop position, the aircraft axis of the aircraft 3 is on a fuselage guide line AL drawn on the apron, and the regular stop position is set in the extending direction of the fuselage guide line AL. The regular stop position is set corresponding to the aircraft type of the aircraft 3.

Hereinafter, movement of the cab 6 after the aircraft 3 is brought to a stop is briefly described. The cab 6 moves from the standby position, and consequently, the distal end part 6a of the cab 6 gets docked with a part of the aircraft 3, the part being located immediately below the door 3a (the docked state of the cab 6 at the time is indicated by two-dot chain line of FIG. 1). Thereafter, at the time of undocking the cab 6 from the aircraft 3, the cab 6 returns to and stops at the standby position, and waits at the standby position until an operation of docking the cab 6 with the next aircraft is started. It should be noted that at the time of undocking the cab 6 from the aircraft 3 and returning the cab 6 to the standby position, a target position (position coordinates) of the travel device 10 for the cab 6 to be at the standby position is prestored in the controller 50.

It should be noted that a state (a docked state) where the cab 6 is in close proximity to the aircraft 3 and the distal end part 6a of the cab 6 is docked with a part of the aircraft 3, the part being located immediately below the door 3a, is a state where the distal end part 6a of the cab 6 is adjacent to or in contact with the aircraft 3. That is, the docked state may be a state where a slight gap that would not hinder walking between the cab 6 and the aircraft 3 is formed between the bumper 62 of the distal end part 6a of the cab 6 and the aircraft 3, or may be a state where the bumper 62 is in contact with the aircraft 3.

Next, one exemplary case in the present embodiment is described, in which the passenger boarding bridge 1 (the cab 6) gets docked with the aircraft 3 by automatic control. An operator inserts the operation key into the key switch 36 and then turns the operation key in a predetermined direction to change the state of the key switch 36 from an OFF state to an ON state.

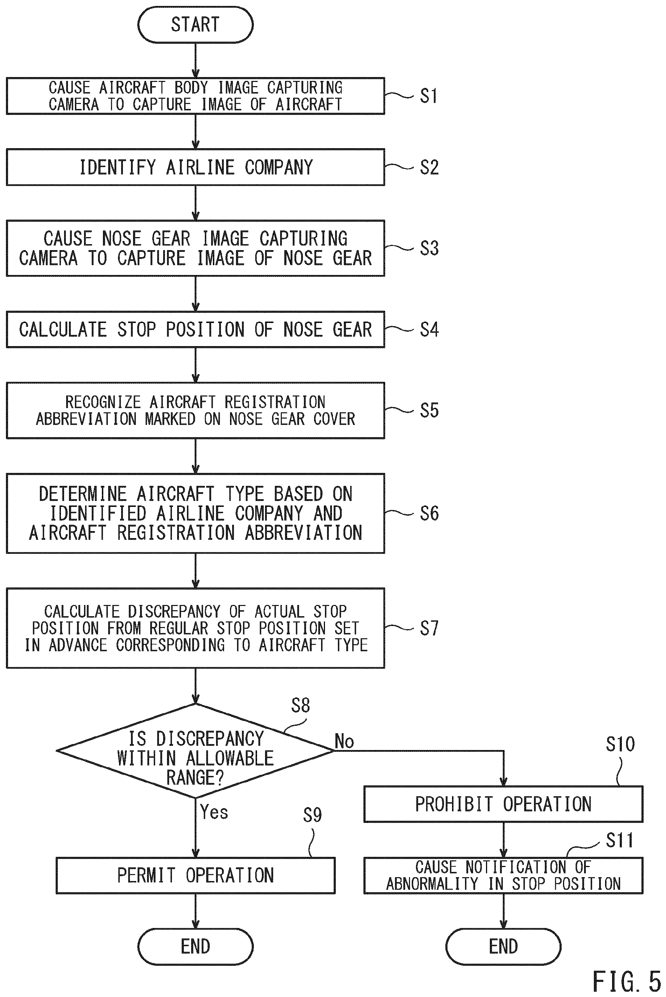

Next, the operator presses an automatic docking start button included in the operating device 30. An operation signal corresponding thereto is inputted to the controller 50. In response, the controller 50 performs a stop position determination process to determine whether or not an actual stop position of the aircraft 3 is within an allowable range with respect to the regular stop position. The stop position determination process will be described below in detail with reference to FIG. 5.

If it is determined as a result of the stop position determination process that the actual stop position of the aircraft 3 is within the allowable range with respect to the regular stop position, the controller 50 starts automatic docking to dock the cab 6 with the aircraft 3. Here, in the case of moving the cab 6 from the standby position to dock the cab 6 with the door 3a (to be exact, around the door 3a) of the aircraft 3 by automatic docking, i.e., by automatic control, for example, the controller 50 captures images of the door 3a of the aircraft 3 by the cameras 21 and 22 installed on the cab 6, recognizes the three-dimensional position of the door 3a from, for example, these captured images, and calculates a position (a docking position) at which the distal end part 6a of the cab 6 is to be docked with the door 3a.

Then, the controller 50 controls the travel device 10, the lifting/lowering device 8, and the cab rotator 6R to move the distal end part 6a of the cab 6 to the aforementioned docking position, thereby docking the cab 6 with the door 3a of the aircraft 3. It should be noted that the docking position may be calculated before starting to move the cab 6 and also while moving the cab 6, i.e., may be calculated multiple times. Further, the position of the door 3a may be calculated by using detection values from the distance sensors 23. After the cab 6 has been docked with the door 3a of the aircraft 3, the controller 50 causes the closure 63 to extend, thereby expanding the bellows portion. In this manner, the docking of the passenger boarding bridge 1 with the aircraft 3 is completed. Thereafter, the door 3a of the aircraft 3 is opened to enable movement of passengers and so forth between the boarding bridge body 1A and the aircraft 3.

FIG. 5 is a flowchart showing one example of the stop position determination process performed by the controller 50. The controller 50 starts the process shown in FIG. 5 when, for example, the automatic docking start button included in the operating device 30 is pressed as described above.

First, the controller 50 causes the aircraft body image capturing camera 92 to capture an image of, for example, a painted pattern on the fuselage of the stopped aircraft 3 (step S1). The controller 50 obtains the captured image of the aircraft 3 from the aircraft body image capturing camera 92, and analyzes the captured image to identify an airline company that uses the aircraft 3 (step S2).

The painted pattern on the body of each aircraft, especially that on the fuselage, is different from one airline company to another. It should be noted that there are also aircrafts with special painting thereon, such as wrap advertising. That is, there may be a plurality of different painted patterns within the same airline company. Including them, each airline company adopts their own characteristic painted pattern(s) on their aircrafts. Based on each painted pattern, the corresponding airline company is identifiable. Data of a plurality of painted patterns are prestored in the storage unit of the controller 50 in association with a plurality of airline companies. The data of the plurality of painted patterns prestored herein are data associated with aircrafts that have a possibility to get parked at a subject gate that relates to at least the passenger boarding bridge 1. The controller 50 identifies the airline company that uses the aircraft 3 based on the following factors: the painted pattern, on the aircraft 3, whose image has been captured by the aircraft body image capturing camera 92; and the data of the plurality of painted patterns that are prestored. That is, among the data of the plurality of painted patterns that are prestored, the controller 50 selects data of a painted pattern that coincides with or is most similar to the painted pattern, on the aircraft 3, whose image has been captured by the aircraft body image capturing camera 92, and identifies an airline company associated with the selected data of the painted pattern as the airline company that uses the aircraft 3.

Next, the controller 50 causes the nose gear image capturing camera 91 to capture an image of the nose gear 3b of the aircraft 3 (step S3). The controller 50 obtains the captured image of the aircraft 3 from the nose gear image capturing camera 91, and analyzes the captured image to calculate the stop position of the nose gear 3b of the aircraft 3 (step S4).

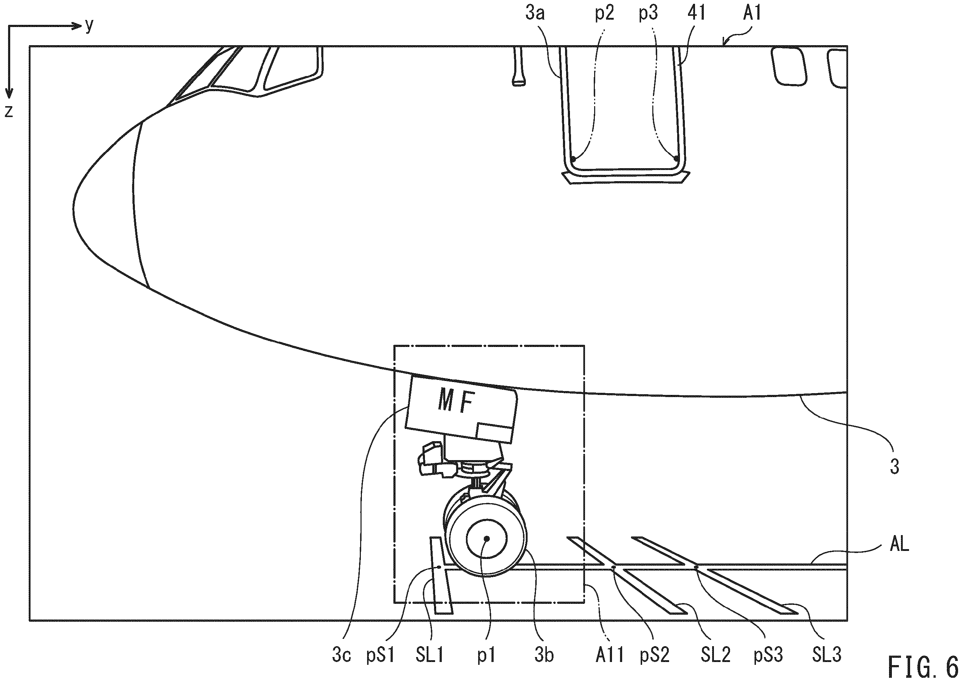

FIG. 6 is a schematic diagram showing one example of an image A1 captured by the nose gear image capturing camera 91 when the cab 6 is at the standby position.

As shown in FIG. 6, on the apron, a plurality of stop lines SL1 to SL3 corresponding to a plurality of aircraft types are drawn together with the fuselage guide line AL. Positions pS1 to pS3 of intersection points of the fuselage guide line AL and the stop lines SL1 to SL3 are regular stop positions corresponding to respective aircraft types. Position coordinates of these regular stop positions pS1 to pS3 are prestored in the controller 50. Therefore, actual distances between these stop positions pS1, pS2, and pS3 can be calculated.

In step S4, the controller 50 sets, for example, the stop position pS1 as a predetermined reference position, and based on the image captured by the nose gear image capturing camera 91, detects the predetermined reference position pS1 and an actual stop position of the nose gear 3b on the image. The actual stop position of the nose gear 3b is a position that is directly under a center position p1 of the nose gear 3b and that is on the fuselage guide line AL and its extension line. The controller 50 converts a distance on the image between the actual stop position of the nose gear 3b and the reference position pS1 into an actual distance, and based on the actual distance and the position coordinates of the reference position pS1, calculates the position coordinates of the stop position of the nose gear 3b of the aircraft 3. Here, for example, by using a relationship between a distance on the image between the two stop positions pS1 and pS2, whose actual positions (position coordinates) are stored, and an actual distance between the two stop positions pS1 and pS2, the controller 50 may convert the distance on the image between the actual stop position of the nose gear 3b and the reference position pS1 into an actual distance.

In the next step S5, the controller 50 analyzes the image captured by the nose gear image capturing camera 91, and recognizes an aircraft registration abbreviation marked on a cover 3c of the nose gear 3b as characters.

Marked on the cover of the nose gear of each aircraft is an aircraft registration abbreviation that is set for the aircraft by its airline company. An aircraft registration is an identification code to identify an aircraft. Each airline company marks, for example, the last two or three characters of the aircraft registration on the cover 3c of the nose gear 3b as an aircraft registration abbreviation. In the example of FIG. 6, "MF" is the aircraft registration abbreviation. Since this abbreviation is set by the airline company, there is a case where the abbreviation marked on the cover 3c is the same between different aircrafts. In other words, by identifying the airline company of an aircraft, the official aircraft registration of the aircraft is uniquely determined from the abbreviation.

That is, for each airline company, aircraft registration abbreviations can be associated with official aircraft registrations. Also, official aircraft registrations, which are identification codes to identify aircrafts, can be associated with aircraft types of the aircrafts. Therefore, for each airline company, aircraft registration abbreviations of aircrafts can be associated with aircraft types of the aircrafts.

The controller 50 prestores therein, for example, association information in which airline companies, aircraft registration abbreviations, and aircraft types are associated with each other.

In the next step S6, based on the airline company identified in step S2, the aircraft registration abbreviation recognized in step S5, and the aforementioned association information, the controller 50 determines the aircraft type of the aircraft 3. It should be noted that the association information may be divided into the following two type of association information: first association information in which airline companies, aircraft registration abbreviations, and official aircraft registrations are associated with each other; and second association information in which the official aircraft registrations and aircraft types are associated with each other.

In the next step S7, the controller 50 calculates a discrepancy of the actual stop position of the nose gear 3b of the aircraft 3 from a regular stop position of the nose gear 3b, the regular stop position being set in advance corresponding to the aircraft type determined in step S6. For example, in a case where the regular stop position of the nose gear 3b of the aircraft type determined in step S6 is pS2 (FIG. 6), since the position coordinates of the regular stop position pS2 are prestored, the discrepancy may be calculated based on the prestored position coordinates and the position coordinates of the actual stop position calculated in step S4. The discrepancy is an amount of deviation of the actual stop position from the regular stop position on the fuselage guide line AL and its extension line. It should be noted that a discrepancy of the actual stop position of the nose gear 3b from the regular stop position in a direction orthogonal to the fuselage guide line AL is very small and non-problematic. Therefore, in the description herein, the discrepancy in the orthogonal direction is not taken into consideration.

In the next step S8, the controller 50 determines whether or not the discrepancy calculated in step S7 is within an allowable range that is set in advance. The allowable range is, for example, a range of ±1 m. In a case where the discrepancy is within the allowable range, the controller 50 determines that the stop position of the aircraft 3 is a normal position, and permits the boarding bridge body 1A to operate (step S9). In this example, the aforementioned automatic docking is started.

On the other hand, in a case where the discrepancy is out of the allowable range, the controller 50 determines that the stop position of the aircraft 3 is an abnormal position, prohibits the boarding bridge body 1A from operating (step S10), and causes the external speaker 93 to notify information about the abnormality in the stop position of the aircraft 3 (step S11). In this case, since the controller 50 prohibits the boarding bridge body 1A from operating in step S10, the automatic docking is not started. Further, in step S11, the information to be notified may be prestored in the controller 50 as an audio file, and may be information indicating that there is an abnormality in the stop position of the aircraft 3, or may be information to urge an adjustment in the stop position of the aircraft 3. Since the information about the abnormality in the stop position of the aircraft 3 can be notified to a worker on the apron, the worker can, for example, promptly adjust the stop position of the aircraft 3 by using a pushback truck or the like, so that the discrepancy of the stop position falls within the allowable range.

After adjusting the position of the aircraft 3 in this manner, the operator may press the automatic docking start button again to start the process shown in FIG. 5. Alternatively, the operating device 30 may be provided with an abnormality canceling button, and the operator may press the abnormality canceling button to cause the controller 50 to start the aforementioned automatic docking. It should be noted that the information notified in step S11 may also be outputted from the display 34 and/or audio outputter 35 included in the operating panel 31.

In the above description, steps S2, S5, and S6 are process steps in which the controller 50 functions as the determination processor 52, and steps S4 and S7 are process steps in which the controller 50 functions as the stop discrepancy calculator 53. Further, step S10 is a process step in which the controller 50 functions as the body controller 51.

It should be noted that, in the process shown in FIG. 5, step S3 and the steps thereafter need to be performed after the aircraft 3 has stopped, but steps S1 and S2 may be performed before the aircraft 3 stops. In a case where step S1 and the steps thereafter are performed after the aircraft 3 has stopped, the order in which steps S1 to S5 are performed is changeable. For example, steps S3 to S5 may be performed before steps S1 and S2, or steps S1 and S2 may be performed in parallel with steps S3 to S5.

Further, in the process shown in FIG. 5, step S4 may be eliminated. In this case, in step S7, based on the image A1 captured by the nose gear image capturing camera 91, the controller 50 detects, on the image, the regular stop position (e.g., the stop position pS2) of the nose gear 3b of the aircraft 3, the regular stop position being set corresponding to the aircraft type determined in step S6, and the actual stop position of the nose gear 3b. The actual stop position of the nose gear 3b is, as described above, a position that is directly under the center position p1 of the nose gear 3b and that is on the fuselage guide line AL and its extension line. The discrepancy may be calculated by converting a distance on the image between the actual stop position and the regular stop position pS2 into an actual distance.

In the above description, the stop position determination process shown in FIG. 5 is started by pressing the automatic docking start button. Alternatively, the operating device 30 may include a start dedicated button dedicated to starting the stop position determination process. In this case, by pressing the start dedicated button, the stop position determination process shown in FIG. 5 is started, and after permitting the boarding bridge body 1A to operate in step S9, automatic docking may be started by pressing the automatic docking start button. In this case, the display 34 and/or the audio outputter 35 may be caused to output information indicating that the boarding bridge body 1A has been permitted to operate in step S9.

Also, in the case of manual control, a traveling operation of the travel device 10, a lifting/lowering operation of the lifting/lowering device 8, and a rotating operation of the cab rotator 6R can be performed by the operator operating the operating device 30. In the case of docking the cab 6 with the aircraft 3 by manual control, the aforementioned start dedicated button dedicated to starting the stop position determination process is pressed to start the stop position determination process shown in FIG. 5. Then, when the boarding bridge body 1A is permitted to operate in step S9, each part of the boarding bridge body 1A is operated by manual control, and thereby the cab 6 can be docked with the aircraft 3. On the other hand, when the boarding bridge body 1A is prohibited from operating in step S10, an operation or operations of the boarding bridge body 1A by operating the operating device 30 is/are prohibited. Here, at least an operation of bringing the cab 6 close to the aircraft 3, for example, an operation of bringing the cab 6 close to the aircraft 3 by the travel device 10, may be prohibited. This makes it possible to ensure a high degree of safety.

Instead of pressing the aforementioned start dedicated button dedicated to starting the stop position determination process, the operator may insert the operation key into the key switch 36 and then turn the operation key in a predetermined direction to change the state of the key switch 36 from an OFF state to an ON state. In response thereto, the stop position determination process shown in FIG. 5 may be started.

It should be noted that the passenger boarding bridge 1 may be configured such that it can be remotely operated. In this case, the controller 50 is configured such that, for example, remote operation equipment installed in a central monitoring room of the terminal building and the controller 50 are communicable with each other. The remote operation equipment includes the same components as those of the operating panel 31, which includes the operating device 30, the display 34, and so forth. When the operator operates the operating device of the remote operation equipment, an operation signal corresponding thereto is transmitted to the controller 50, and thereby docking of the passenger boarding bridge 1 with the aircraft 3 can be performed by automatic control or manual control. In this case, the automatic docking start button, the start dedicated button dedicated to starting the stop position determination process, or the like included in the operating device of the remote operation equipment may be pressed, and the controller 50 may receive an operation signal corresponding thereto from the remote operation equipment. Upon receiving the operation signal, the controller 50 may start the stop position determination process.

In the present embodiment, the nose gear image capturing camera 91, which is used to detect, for example, the stop position of the nose gear 3b, doubles as a camera (a second camera) to capture an image of the cover 3c of the nose gear 3b. Alternatively, the second camera may be additionally installed. Further, in the present embodiment, the aircraft body image capturing camera 92 corresponding to the first camera, the nose gear image capturing camera 91 functioning as the second camera, and the determination processor 52 form an aircraft type determiner 1B (FIG. 4).

### <Variations of Aircraft Type Determiner>

In the present embodiment, without performing the identification of the airline company based on the painted pattern (step S2) and without performing the recognition of the aircraft registration abbreviation marked on the nose gear cover 3c (step S5), the aircraft type may be determined in a manner as described in Variation 1 or Variation 2 below.

### (Variation 1)

Generally speaking, each aircraft has a characteristic feature in its mechanical structure (suspension structure) near the nose gear depending on its aircraft type. In view of this, in the aircraft type determiner of Variation 1, the controller 50 prestores, in the storage unit thereof, a laterally seen shape pattern of the mechanical structure of the nose gear and its vicinity (this shape pattern is hereinafter referred to as "nose gear part shape pattern") for each of a plurality of aircraft types.

Then, the controller 50, for example, compares an image A11 shown in FIG. 6 and captured by the nose gear image capturing camera 91, the image A11 being an image of a region including the mechanical structure of the nose gear 3b and its vicinity, with a plurality of nose gear part shape patterns mentioned above, and based on the comparison, selects, as the aircraft type of the aircraft 3, aircraft types (a plurality of aircraft types) whose nose gear part shape patterns are similar to the nose gear part shape pattern in the image A11. Then, the center position p1 of the nose gear 3b is calculated from the image A1 captured by the nose gear image capturing camera 91, and a distance on the image between a reference point p2 or a reference point p3 on the door 3a and the center position p1 of the nose gear 3b (hereinafter, referred to as "distance a") is calculated.

The reference points p2 and p3 are boundary points between curved portions of lower left and right corners of a painted portion 41 of the door 3a and straight portions extending upward from the corners. In general, the contour portion of the door 3a of the aircraft 3 is painted so that the door 3a can be visually recognized. The reference points p2 and p3 on the door 3a can be detected based on the shape of the painted portion 41. The controller 50 defines a yz orthogonal coordinate system by setting a predetermined position (e.g., the upper left corner) on the captured image A1 as the origin (0, 0). The y coordinate value and the z coordinate value of any point on the captured image A1 are represented by a pixel value counted from the origin (0, 0).

The aforementioned distance a on the image may be a distance in the Y-axis direction, a distance in the Z-axis direction, or a linear distance. The control device 50 prestores therein, for each aircraft type, an actual distance (length) corresponding to the distance a on the image. In this case, the controller 50 may determine, as the aircraft type of the aircraft 3, one aircraft type that is common between aircraft types (a plurality of aircraft types) that have been each selected as the aircraft type of the aircraft 3 by using the nose gear part image A11 and aircraft types (a plurality of aircraft types) that have been each determined as the aircraft type of the aircraft 3 by using the distance a on the image. That is, aircraft types may be narrowed down for the aircraft 3 to some aircraft types by using the nose gear part image A11; thereafter, the distance a on the image may be converted into an actual distance by using, for example, distances detected by the distance sensors 23, and the actual distance obtained from the conversion may be compared with the actual distances stored for the respective aircraft types; and based on the comparison, the aircraft type of the aircraft 3 may be determined.

### (Variation 2)

Depending on the airport, the number of types of aircrafts to be parked at a subject gate is small, and in such a case, the aircraft type of an aircraft can be identified by determining, for example, whether the aircraft is a large aircraft or a small aircraft. In view of this, in the aircraft type determiner according to Variation 2, the controller 50 may analyze an image of the aircraft 3 captured by the aircraft body image capturing camera 92 to determine, for example, the shape, the number of engines, wing shape, etc., of the aircraft 3, and based thereon, the controller 50 may determine whether the aircraft 3 is a large aircraft or a small aircraft, thereby determining the aircraft type of the aircraft 3.

The aircraft type determiner according to the present embodiment, including the above-described aircraft type determiner 1B and Variations 1 and 2, is configured to: capture an image of the aircraft 3 when the boarding bridge body 1A is at the standby position; and determine the aircraft type of the aircraft 3 based on the captured image.

The present embodiment includes the aircraft type determiner, which captures an image of the aircraft 3 and determines the aircraft type of the aircraft 3 based on the captured image. The stop position of the nose gear 3b is detected based on an image captured by the nose gear image capturing camera, which captures an image of the nose gear 3b of the aircraft 3. The discrepancy of the stop position of the nose gear 3b from the regular stop position that is set in advance corresponding to the aircraft type determined by the aircraft type determiner is calculated. In this manner, the discrepancy of the actual stop position of the aircraft 3 from the regular stop position of the aircraft 3 can be calculated without requiring an input of aircraft type information about the aircraft 3.

The above aircraft type determiner 1B includes: the first camera (the aircraft body image capturing camera 92), which captures an image of a painted pattern painted on the aircraft when the support equipment body (the boarding bridge body 1A) is at the standby position, the painted pattern being characteristic to the airline company that uses the aircraft; the second camera (the nose gear image capturing camera 91), which captures an image of the cover of the nose gear of the aircraft when the support equipment body is at the standby position; and the determination processor 52, which determines the aircraft type of the aircraft based on the airline company that is identified from the painted pattern whose image has been captured by the first camera and the aircraft registration abbreviation that is marked on the cover of the nose gear whose image has been captured by the second camera.

According to the aircraft type determiner 1B, the aircraft type of the aircraft is determined based on the airline company identified from the aircraft's painted pattern whose image has been captured by the first camera and the aircraft registration abbreviation marked on the cover of the nose gear whose image has been captured by the second camera. Here, the official aircraft registration (the identification code of the aircraft) is uniquely determined from the airline company that uses the aircraft and the aircraft registration abbreviation that is set by the airline company, and the aircraft type of the aircraft is uniquely determined from the official aircraft registration. Thus, the aircraft type of the aircraft can be uniquely determined from the airline company that uses the aircraft and the aircraft registration abbreviation that is marked on the aircraft. This makes it possible to accurately determine the aircraft type of the aircraft.

Data of a plurality of painted patterns associated with a plurality of airline companies are prestored in the storage unit of the controller 50. The airline company that uses the aircraft 3 can be identified based on the painted pattern, on the aircraft 3, whose image has been captured by the first camera and the data of the plurality of painted patterns that are prestored. At the time, there is often the case that the painted pattern on the aircraft 3 has a shape that is less intricate than the shape of the nose gear part (i.e., less intricate than the shape of the mechanical structure of the nose gear and its vicinity) of, for example, Variation 1. Accordingly, the controller 50 (the determination processor 52) can readily recognize the painted pattern on the aircraft 3 and can readily identify the airline company. Further, as shown in FIG. 6, when the aircraft 3 is stopped, the cover 3c of the nose gear 3b is opened. Accordingly, an image of the aircraft registration abbreviation marked on the cover 3c of the nose gear 3b can be captured by the second camera from substantially the front direction. Therefore, the controller 50 (the determination processor 52) can accurately recognize the aircraft registration abbreviation as characters. This also makes it possible to accurately determine the aircraft type of the aircraft.

The passenger boarding bridge 1 including the boarding bridge body 1A and the aircraft type determiner 1B in the present embodiment is useful since the passenger boarding bridge 1 can accurately determine the aircraft type of the aircraft 3 without requiring an input of aircraft type information about the aircraft 3. For example, in a case where a preset function is used at the time of docking the boarding bridge body 1A with the aircraft 3 by manual control, conventionally, aircraft type information about the aircraft 3 is inputted. However, the present embodiment can use the preset function without requiring an input of aircraft type information.

In the present embodiment, in the case of using the preset function, the operator presses a preset button included in the operating device 30. In response, the controller 50 causes the travel device 10 to travel to a target position of the travel device 10 (specifically, to a position that is in front of the aircraft 3 and that is for cab docking), the target position being set in advance corresponding to the aircraft type of the aircraft 3 determined by the aircraft type determiner 1B. The controller 50 further causes the lifting/lowering device 8 to perform lifting/lowering by a specific lifting/lowering amount for cab docking, the specific lifting/lowering amount being set in advance corresponding to the determined aircraft type. The controller 50 may further cause the cab rotator 6R to rotate to a specific rotational angle for cab docking, the specific rotational angle being set in advance corresponding to the determined aircraft type. Thus, the preset function can be used without requiring an input of aircraft type information. By the preset function, the boarding bridge body 1A can be moved to a position that is set in advance corresponding to the aircraft type of the aircraft 3, and thus the boarding bridge body 1A can readily perform the operation of coming close to the aircraft 3.

In the present embodiment, the passenger boarding bridge has been described as one example of airport ground support equipment. The present invention is applicable to airport ground support equipment including a support equipment body, in which the support equipment body is configured to perform an operation of coming close to an aircraft stopped on an apron from a standby position and to enable a person and/or an article to move between the support equipment body and the aircraft when the support equipment body is adjacent to or in contact with the aircraft. Examples of such airport ground support equipment include a passenger boarding bridge, a passenger step car, and an airport catering truck. The standby position is a position where the support equipment body stands by before starting the operation of coming close to the aircraft.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The present invention is useful as, for example, airport ground support equipment that makes it possible to calculate a discrepancy of an actual stop position of an aircraft from a regular stop position of the aircraft without requiring an input of aircraft type information about the aircraft.

### Reference Signs List

1A boarding bridge body
1B aircraft type determiner
51 body controller
52 determination processor
53 stop discrepancy calculator
91 nose gear image capturing camera
92 aircraft body image capturing camera
93 external speaker

## Claims

1. Airport ground support equipment comprising:
a support equipment body configured to perform an operation of coming close to an aircraft stopped on an apron from a standby position and to enable a person and/or an article to move between the support equipment body and the aircraft when the support equipment body is adjacent to or in contact with the aircraft;
an aircraft type determiner that captures an image of the aircraft when the support equipment body is at the standby position and that determines an aircraft type of the aircraft based on the captured image;
a nose gear image capturing camera that is mounted to the support equipment body and that captures an image of a nose gear of the aircraft stopped on the apron when the support equipment body is at the standby position; and
a stop discrepancy calculator that detects a stop position of the nose gear based on the image captured by the nose gear image capturing camera and that calculates a discrepancy of the stop position of the nose gear from a regular stop position that is set in advance corresponding to the aircraft type determined by the aircraft type determiner.

2. The airport ground support equipment according to claim 1, wherein
the aircraft type determiner includes:
a first camera that captures an image of a painted pattern painted on the aircraft, the painted pattern being characteristic to an airline company that uses the aircraft;
a second camera that captures an image of a cover of the nose gear of the aircraft; and
a determination processor that determines the aircraft type of the aircraft based on the airline company that is identified from the painted pattern whose image has been captured by the first camera and an aircraft registration abbreviation that is marked on the cover of the nose gear whose image has been captured by the second camera.

3. The airport ground support equipment according to claim 1 or 2, further comprising:
a body controller that prohibits the support equipment body from performing the operation of coming close to the aircraft in a case where the discrepancy calculated by the stop discrepancy calculator is out of an allowable range.

4. The airport ground support equipment according to any one of claims 1 to 3, further comprising:
a notifier that notifies information about an abnormality in the stop position of the aircraft to outside in a case where the discrepancy calculated by the stop discrepancy calculator is out of the allowable range.
